# EUROPEAN PATENT SPECIFICATION

(11) **EP 0 605 472 B1**
(45) Date of publication and mention of the grant of the patent: **02.04.1997**
(21) Application number: 92919028.8
(22) Date of filing: 08.09.1992
(51) Int. Cl.: C21B 3/08, B01J 2/04

(54) **SLAG GRANULATION**
GRANULIEREN VON SCHLACKE
GRANULATION DES SCORIES

(30) Priority: 17.09.1991 GB 9119788
(43) Date of publication of application: 13.07.1994
(73) Proprietor: DAVY MCKEE (STOCKTON) LIMITED, Stockton-on-Tees Cleveland TS18 3RE (GB)
(72) Inventor: FEATHERSTONE, William Barry, Guisborough, Cleveland TS14 8HZ (GB); MACAULEY, Derek, Braemar Cottage, Nr. Darlington, County Durham DL2 2LJ (GB)
(74) Representative: Kirk, Geoffrey Thomas
(86) International application number: PCT/GB92/01635
(87) International publication number: WO 93/06250

(56) References cited:
- DE-A- 2 654 914
- US-A- 3 721 511
- US-A- 4 256 677

## Description

This invention relates to a method of, and apparatus for, granulating a molten material. The material may be a metal, such as iron; a metal oxide, such as titanium oxide; a non-metal, such as slag generated as a by-product of a metals production processs; or a mixture thereof. The invention is particularly applicable to the granulation of slag tapped from an iron blast furnace. The granulated slag can be used as a Portland cement substitute in the manufacture of concrete.

GB-B-2148330 discloses an apparatus and method for the granulation of slag. The granulator includes a rotary atomiser located within an enclosure. The base of the enclosure is in the form of a hopper containing a fluidised bed. In use, a stream of molten slag is poured on to the atomiser which is rotated at a speed such that the slag is ejected from the atomiser as a sheet or ribbon. Air jets from nozzles surrounding the atomiser impinge upon the sheet or ribbon and break it up into granules and impart an upward motion to them. The granules then fall towards the base of the enclosure where they pass through a countercurrent stream of secondary air and then enter into the fluidised bed.

This apparatus and method suffer from the disadvantage of the need to provide the air jets which impinge upon the sheet or ribbon to break it up into granular form. A considerable input energy requirement is necessary to provide air jets of sufficient force to break up the sheet or ribbon of slag and provide upward motion to the granules.

It is known from DE-A-2211682 to use an atomiser which includes a rapidly rotating plate to granulate molten slag without the necessity of employing air jets to break up the slag ejected from the rotating plate. In the disclosure of this German patent application, a substantially horizontal refractory-lined plate is rotated about a vertical axis in an enclosure. A stream of molten slag is poured on to the rotating plate and it is flung of the plate in the form of droplets. The droplets impringe against an inner wall of the enclosure and roll along a conically converging lower part of the wall to an exit point below the atomiser.

It is considered that this form of granulator is unreliable because it depends on the granules rolling down the inner wall of the enclcsure to the exit point. If some granules stick to the wall, they prevent others from rolling down the wall and a build up of hardened granules on the wall soon occurs.

It is known from DE-A-2654914 for a granulator of molten magnesium or its alloys to comprise a centrifugal granulator with a perforated sleeve and a cylindrical chamber for trapping granules formed from the molten metal upon it being flung out through the perforated sleeve. Within the chamber there is an annular trough for receiving the granules and the trough has at least one outlet opening and a rotatable ring having scrapers located in the trough. The ring is rotated to scrape the granules to the outlet opening.

This arrangement may also suffer from the problem of granules sticking together in the trough. When the granules fall into the trough they may be only partially frozen and tend to stick to uncooled surfaces and to each other.

An object of the present invention is to provide a method of, and apparatus for, granulating molten material in which the disadvantages of the prior art arrangements are overcome.

According to a first aspect of the invention, a granulator comprises an enclosure; a rotary atomiser disposed within the enclosure; means for delivering molten material to the atomiser so that, in use, the material is broken into globules without the use of fluid jets and the globules are dispersed within the enclosure; and an annular open-topped trough surrounding the atomiser to collect the granules formed from the at least partially frozen globules, and means for moving the granules in the trough towards at least one exit from the trough;
characterised in that
the trough has apertures in the base thereof and means are provided for injecting gas through the apertures into the trough, said apertures being directed such that a circumferential gas flow is set up in the trough, said gas flow serving to move the granules in the trough towards said at least one exit.

The trough surrounding the atomiser collects and cools the granules, forming a mobile bed of granulate in the process the circumferential motion of the bed is brought about by gas, normally air, which is injected at a small angle to the horizontal into the bed through a slotted plate or gas distributor. The granulate bed moves circumferentially around the trough to one or more exits from the trough.

Granulation may start with no material in the trough, in which case a granulate bed is gradually built up, or a bed of cooled granulate from a previous run may be left in the trough to assist in the cooling process. The motion of the bed serves to encourage heat transfer between hot granulate and the injected gas and between hot and cold granulate. In addition, the bed motion acts to prevent re-agglomeration of the granules.

The design of the slotted plate and trough allows relatively high gas velocities through the slots to promote the circumferential motion. At the same time, the depth of the granulate bed is such that these high slot velocities are dissipated in the bed resulting in relatively low superficial gas velocities through the bed. The advantage of this arrangement is that a large range of particle sizes can be dealt with whilst avoiding significant elutriation and maintaining a relatively dense bed.

In certain applications, it is possible to modify the circumferential granulate motion towards the trough exits by use of a slightly inclined trough base.

The rotary atomiser conveniently comprises a thick disc of refractory material having a shaped top surface which promotes the desired slag droplet trajectory. The top surface may be dished to a greater or lesser extent depending upon desired trajectory, slag flow rate, cup speed range specification and desired particle size range. The device is rotated about a vertical axis by means of an electric motor which is located under appropriate covers beneath the device. The speed of rotation of the device is controlled as a function of slag flow rate, higher flows requiring higher rotational speeds to maintain droplet trajectory and size distribution. For this reason, the electric motor is driven by a variable speed drive (inverter).

According to a second aspect of the invention, in a method of granulating a molten material, a stream of the molten material is delivered to a rotating atomiser disposed within an enclosure; the speed of rotation of the atomiser is such that the molten material is ejected from the atomiser in the form of globules without the use of fluid jets; the passage of the globules within the enclosure cause them to at least partially freeze to form granules; the granules are collected in an annular open-topped trough surrounding the atomiser characterised in that gas entering through apertures in the base of the trough is injected into the trough to induce a circumferential movement of the granules in the trough towards at least one exit from the trough.

The globules of molten material ejected from the rotating atomiser fly outwardly towards the surrounding walls of the enclosure. The paths taken by the globules depend to a certain extent on the size of the globules. The globules spread out in the vertical plane as well as in the horizontal plane. The globules thus become in contact with the air in the enclosure and heat transfer between the globules and the air during the movement of the globules cause the globules to at least partially solidify to form granules. Some of the granules fall directly into the annular trough, while others will first impinge against the side wall of the enclosure before falling into the trough. To this end, it is desirable for the side wall of the enclosure to include a part which is at a higher level than the top of the trough, said higher part being of annular form with the lower end thereof leading to the top of the trough. This part of the side wall is conveniently liquid cooled such as by circulating liquid in a jacket mounted on the rear of the wall. Alternatively, the part of the side wall may have downwardly directed openings therein, and means are provided for directing cooling gas through the openings into the enclosure. The cooled wall or the air directed through the openings in the wall serve to prevent granules from sticking to the wall and the granules leave the wall and fall into the trough.

Some of the other globules/granules ejected from the atomiser will fall short of the trough and, preferably, an inclined surface extends downwardly from the rotary atomiser to the adjacent top edge of the trough. This surface conveniently has openings in it and gas is directed through the openings to the upper side of the surface. The gas and the inclined surface encourage the granules deposited on the surface to move into the trough.

It is desirable that means are provided to control the operating temperature within the enclosure so that, for example, a predetermined exit gas temperature is not exceeded. For example, an exit gas temperature not exceeding 400°C may be desired. The operating temperature will depend to some extent on the rate at which the molten material is supplied to the atomiser. If, for any reason, the flow rate of the molten material increases suddenly, the exit gas temperature may exceed the desired level. To this end, the means to control the exit gas temperature may comprise sprays or atomisers for introducing a water mist into the enclosure. The water mist serves to remove heat from the enclosure by evaporation and it reduces the temperature of the air in the enclosure. The water mist is totally evaporated and it does not wet any surface within the enclosure nor does it wet the granulated product. A simple control circuit is employed which compares the actual temperature in the enclosure with the predetermined desired temperature in the enclosure and adjusts the quantity of water mist applied to the enclosure accordingly. It must be emphasised that the water mist only serves to control the operating temperature and it does not assist in the break up of the molten material in the globules.

In order that the invention may be more readily understood, it will now be described, by way of example only, with reference to the accompanying drawings, in which:-
Figure 1 is a sectional elevation through apparatus in accordance with the invention;
Figure 2 is a sectional elevation on the line II-II of Figure 1; and
Figure 3 is an inverted plan on the line III-III of Figure 1.

A granulator for granulating slag which is a by-product from a blast furnace consists of a rotary atomiser having a duct along which molten slag is passed and poured on to the atomiser, an annular trough surrounding the atomiser and an enclosure in which the atomiser and the trough are located.

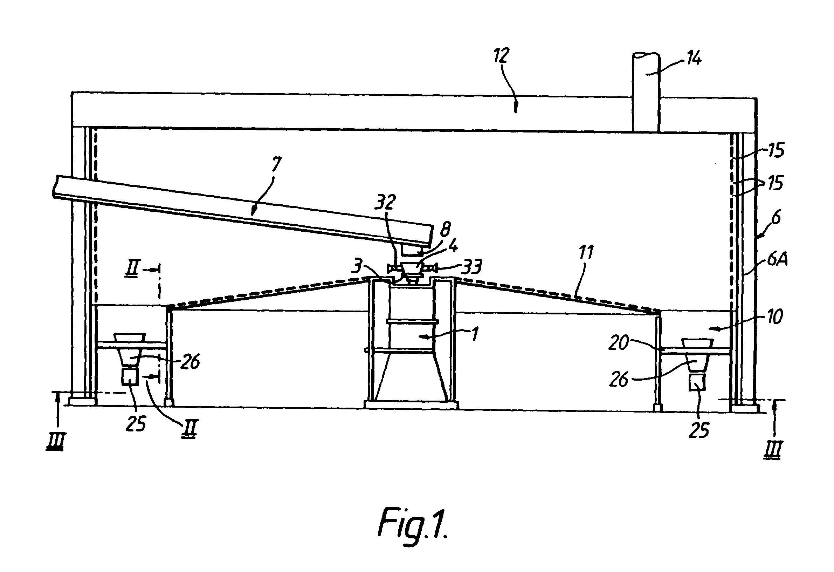

Referring particularly to Figure 1, the rotary atomiser (1) comprises a stationary electric motor driven by, for example, a variable speed drive and having a vertical drive shaft. Mounted on the drive shaft is a flange (3) supporting a refractory dish or cup (4). The dish or cup has an upwardly facing concave surface and it is rotated about a vertical axis. The speed of rotation of the dish or cup can be varied. The atomiser is located within a generally cylindrical enclosure (6) and a feed duct (7) extends from outside the enclosure to a position above the atomiser (1). An outlet nozzle (8) permits molten slag flowing down the duct (7) to fall as a stream on to the concave surface of the cup (4). Surrounding the atomiser (1) there is an annular trough (10) and the top of the trough is at a lower level than the cup (4). A frusto-conical surface (11) extends downwardly from the rotary atomiser to the adjacent top edge of the trough. The part (6A) of the side wall, which is at a higher level than the top of the trough, has its lower end leading to the top of the trough. The enclosure is covered by a top structure (12) through which extends at least one discharge pipe (14). The part (6A) of the side wall of the enclosure may have a water jacket mounted on the outside thereof with provision for cooling liquid to be circulated through the jacket in order to cool the wall. However, in the arrangement shown, this part of the side wall has downwardly directed openings (15) therethrough and a hollow casing behind the wall enables a cooling gas, usually air, to be directed through the openings into the enclosure. The flow of air is downwardly towards the trough (10). Similarly, the frusto-conical surface (11) has openings therethrough and a casing below the surface enables gas, usually air, to be directed through the openings to the upper side of the surface. The direction of the air flow through the openings is towards the trough (10).

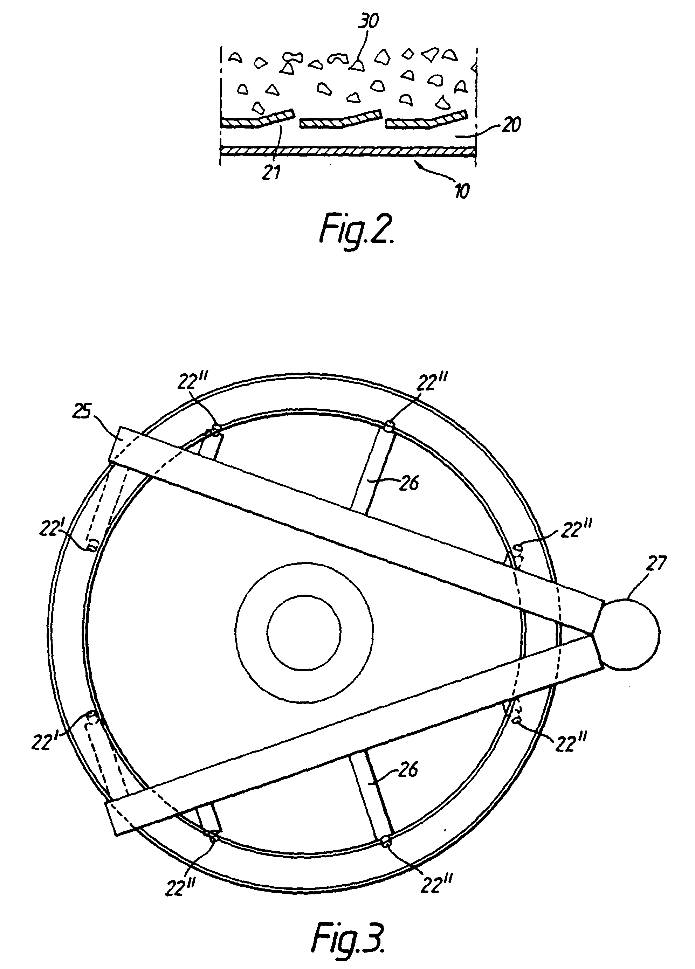

Referring now to Figures 2 and 3 in particular, it can be seen that the base of the trough (10) comprises a wind box (20) which is supplied with air under pressure from a source (not shown). The air is expelled through slots (21) formed in the top of the box. The slots (21) are inclined at an angle of up to 25° to direct the air expelled from the air box in a single circumferential direction around the trough. There are a number of exits located at various positions around the circumference of the trough. In the arrangement shown, eight exits are provided. Each exit consists either of a conduit (22') which extends through the wind box (20) into the bottom of the trough or a hatch (22") in a side wall of the trough. The lower end of each conduit (22') or each duct (22") is positioned above one or other of a pair of conveyor belts or drag link conveyors (25) either directly or via inclined chutes (26). The conveyors may converge towards a single collection station (27).

In use, molten slag is allowed to flow down the duct (7) and fall as a stream on to the cup (4) of the atomiser (1) which is rotating at a speed usually between 750 rpm and 1200 rpm depending on slag flow rate. (Though speeds above this range are possible if required). The slag is ejected outwardly from the rotating cup (4) in the form of globules which spread out into the enclosure and heat transfer takes place between each globule and air within the enclosure to at least solidify the outer skin of the globule so that it becomes a granule. Many of the granules will fall directly into the trough (10) while other granules will impact the side wall (6A) before falling down the wall into the trough. Other granules will fall on to the surface (11) and the air flow through the openings in the surface cause the granules to move down the surface into the trough. Air is passed from the wind box (20) through the slots (21) to provide a circulating air flow in the circumferential direction of the trough (10). The circulating air flow drives the granules (30) which are present in the trough around a part of the trough until the next exit is reached. Many of the granules will leave the trough through the exit but those that fail to leave through the exit will be moved on by the air flow from the wind box to the next exit where an opportunity to exit from the trough occurs. The granules leaving the exits are deposited on the conveyors (25) and taken to the collection point (27). It is to be emphasised that the trough (10) contains a circumferentially mobile bed. The granules are moved around the trough by the air flow in the trough but, though relatively high air velocities are required to do this, air velocities in the bed are low, avoiding significant elutriation of smaller particles and maintaining a relatively dense bed.

The hot air generated in the enclosure passes out of the enclosure through the or each discharge pipe (14) and it can be used to advantage elsewhere in the plant. In order to keep the temperature of the air in the enclosure below a predetermined level, at least one system comprising a pipe (32) having a plurality of nozzles (33) connected to it is supported within the enclosure, conveniently adjacent to the cup (4). Water is circulated through the pipe to issue through the nozzles in the form of a very fine mist. As an alternative to conventional nozzles, air operated atomisers may be employed to produce the mist. The mist injected into the enclosure is evaporated by the heat present in the enclosure and the mist does not wet any of the surfaces inside the enclosure, but the evaporation of the water does reduce the air temperature within the enclosure. Thus, it is convenient to employ a control circuit (not shown) which detects the temperature of the air within the enclosure and compares it with a predetermined value. When the temperature of the air reaches the predetermined value, the mist is generated in the enclosure in order to reduce the temperature. In this way, the temperature should be reduced below the predetermined value.

## Claims

1. A granulator comprising an enclosure (6); a rotary atomiser (1) disposed within the enclosure; means (7) for delivering molten material to the atomiser so that, in use, the material is broken into globules without the use of fluid jets and the globules are dispersed within the enclosure; and an annular open-topped trough (10) surrounding the atomiser to collect the granules formed from the at least partially frozen globules, and means for moving the granules in the trough towards at least one exit (22', 22") from the trough;
characterised in that
the trough (10) has apertures (21) in the base thereof and means (20) are provided for injecting gas through the apertures into the trough, said apertures being directed such that a circumferential gas flow is set up in the trough, said gas flow serving to move the granules in the trough towards said at least one exit (22', 22").

2. A granulator as claimed in claim 1 characterised in that the or each exit from the trough is provided by a conduit (22') extending through the base of the trough.

3. A granulator as claimed in claim 1 or 2, characterised in that the rotary atomiser comprises a refractory member (4) rotatable about a vertical axis and said means for delivering molten metal includes a feed duct (7) extending from outside of the enclosure to a position above the refractory member (4) from which molten metal can fall onto the refractory member.

4. A granulator as claimed in claim 1, 2 or 3, in which the side wall of the enclosure includes a part (6A) which is at a higher level than the top of the trough (10), said part being of annular form with the lower end thereof leading to the top of the trough.

5. A granulator as claimed in claim 4 in which said part of the side wall is liquid cooled.

6. A granulator as claimed in claim 4, in which said part (6A) of the side wall has downwardly directed openings (15) therein, and means are provided for directing cooling gas through the openings into the enclosure.

7. A granulator as claimed in any preceding claim, in which an inclined surface (11) extends downwardly from the rotary atomiser to the adjacent top edge of the trough.

8. A granulator as claimed in claim 7, in which said surface (11) has openings therein and means are provided for directing gas through the openings to the upper side of the surface whereby, in use, said gas serves to direct granules deposited on the surface to the annular trough.

9. A granulator as claimed in any preceding claim, including means (32,33) for introducing a water mist into the enclosure to remove heat therefrom by evaporation.

10. A granulator as claimed in claim 9, in which the means for introducing the water mist comprise water sprays or air operated water atomisers.

11. A method of granulating a molten material, in which a stream of the molten material is delivered to a rotating atomiser disposed within an enclosure; the speed of rotation of the atomiser is such that the molten material is ejected from the atomiser in the form of globules without the use of fluid jets; the passage of the globules within the enclosure cause them to at least partially freeze to form granules; the granules are collected in an annular open-topped trough surrounding the atomiser; characterised in that gas entering through apertures (21) in the base of the trough (10) is injected into the trough (10) to induce a circumferential movement of the granules (30) in the trough (10) towards at least one exit (22', 22") from the trough (10).

12. A method as claimed in claim 11, in which a quantity of previously formed cooled granules are present in the trough to assist in heat transfer from hot granules collected in the trough.

13. A method as claimed in claim 11 or 12, in which the stream of molten material is poured on to a refractory member of the rotary atomiser, said member being rotated about a vertical axis.

14. A method as claimed in claim 11, 12, or 13, in which the operating temperature within the enclosure is controlled by injecting water mist into the enclosure to remove heat therefrom by evaporation of the water mist.

15. A method as claimed in any of the claims 11 to 14, in which the molten material is slag.

## Patentansprüche

1. Granulator, umfassend ein Gehäuse (6); einen in dem Gehäuse angeordneten Rotationszerstäuber (1); Mittel (7) zum Zuführen von Schmelzgut zum Zerstäuber, so daß während des Betriebes das Gut ohne die Anwendung von Fluldstrahlen in Kügelchen zerkleinert wird und die Kügelchen in dem Gehäuse verteilt werden; und eine den Zerstäuber umgebende, ringförmige, offene Rinne (10) zum Sammeln des aus den mindestens teilweise erstarrten Kügelchen gebildeten Granulates und Mittel zum Bewegen des Granulates in der Rinne zu mindestens einem Auslaß (22'; 22") aus der Rinne; dadurch gekennzeichnet, daß
die Rinne (10) in ihrem Boden Öffnungen (21) besitzt und Mittel (20) zum Injizieren von Gas durch die Öffnungen in die Rinne vorgesehen sind, wobei die Öffnungen so ausgerichtet sind, daß in der Rinne ein Gasstrom in Umfangsrichtung errichtet wird, der dazu dient, das Granulat in der Rinne zu dem mindestens einen Auslaß (22'; 22") zu bewegen.

2. Granulator gemäß Anspruch 1, dadurch gekennzeichnet, daß der oder jeder Auslaß aus der Rinne durch ein sich durch den Boden der Rinne erstreckendes Rohr (22') vorgesehen wird.

3. Granulator gemäß Anspruch 1 oder 2, dadurch gekennzeichnet, daß der Rotationszerstäuber ein um eine vertikale Achse drehbares, feuerfestes Element (4) und das Mittel zum Zuführen von schmelzflüssigem Metall ein sich von der Außenseite des Gehäuses zu einer Stelle über dem feuerfesten Element (4) erstreckendes Zuführungsrohr (7) umfaßt, aus dem schmelzflüssiges Metall auf das feuerfeste Element fallen kann.

4. Granulator gemäß Anspruch 1, 2 oder 3, bei dem die Seitenwand des Gehäuses einen Teil (6A) umfaßt, der sich auf einem höheren Niveau als das Oberteil der Rinne (10) befindet, wobei der Teil eine Ringform hat, deren unteres Ende zu dem Oberteil der Rinne führt.

5. Granulator gemäß Anspruch 4, bei dem der Teil der Seitenwand flüssigkeitsgekühlt wird.

6. Granulator gemäß Anspruch 4, bei dem der Teil (6A) der Seitenwand nach unten gerichtete Öffnungen (15) besitzt und Mittel zum Leiten von Kühlgas durch die Öffnungen in das Gehäuse vorgesehen sind.

7. Granulator gemäß einem der vorhergehenden Ansprüche, bei dem sich eine geneigte Fläche (11) von dem Rotationszerstäuber nach unten zu der benachbarten Oberkante der Rinne erstreckt.

8. Granulator gemäß Anspruch 7, bei dem die Fläche (11) Öffnungen darin besitzt und Mittel zum Leiten von Gas durch die Öffnungen zu der Oberseite der Fläche vorgesehen sind, wodurch das Gas während des Betriebes dazu dient, das auf der Fläche abgelagerte Granulat zu der ringförmigen Rinne zu leiten.

9. Granulator gemäß einem der vorhergehenden Ansprüche, umfassend Mittel (32, 33) zum Einführen eines Wassernebels in das Gehäuse, um durch Verdunstung Wärme aus diesem zu abzuleiten.

10. Granulator gemäß Anspruch 9, bei dem die Mittel zum Einführen des Wassernebels Wassersprühmittel oder luftbetriebene Wasserzerstäuber umfassen.

11. Verfahren zum Granulieren eines Schmelzgutes, bei dem ein Strom aus dem Schmelzgut einem in einem Gehäuse angeordneten Rotationszerstäuber zugeführt wird; die Drehzahl des Zerstäubers so ist, daß das Schmelzgut von dem Zerstäuber ohne die Anwendung von Fluidstrahlen in der Form von Kügelchen abgegeben wird; der Durchgang der Kügelchen durch das Gehäuse das mindestens teilweise Erstarren derselben bewirkt, um Granulat zu bilden; das Granulat in einer den Zerstäuber umgebenden, ringförmigen, offenen Rinne gesammelt wird; gekennzeichnet dadurch, daß durch Öffnungen (21) in dem Boden der Rinne (10) eintretendes Gas in die Rinne (10) injiziert wird, um in der Rinne (10) eine Bewegung des Granulates in Umfangsrichtung zu mindestens einem Auslaß (22', 22") aus der Rinne (10) zu erzeugen.

12. Verfahren gemäß Anspruch 11, bei dem eine Menge von zuvor gebildetem, gekühltem Granulat in der Rinne anwesend ist, um den Wärmeübergang von in der Rinne gesammeltem, heißen Granulat zu unterstützen.

13. Verfahren gemäß Anspruch 11 oder 12, bei dem der Strom des Schmelzgutes auf ein feuerfestes Element des Rotationszerstäubers gegossen wird, wobei das Element um eine vertikale Achse gedreht wird.

14. Verfahren gemäß Anspruch 11, 12 oder 13, bei dem die Betriebstemperatur in dem Gehäuse durch Einführen von Wassernebel in das Gehäuse geregelt wird, um durch Verdunstung des Wassernebels Wärme daraus abzuführen.

15. Verfahren nach einem der Ansprüche 11 bis 14, bei dem das Schmelzgut Schlacke ist.

## Revendications

1. Appareil de granulation comprenant une enceinte (6) ; un atomiseur rotatif (1) disposé à l'intérieur de l'enceinte ; des moyens (7) pour amener une matière fondue à l'atomiseur de manière, qu'en service, la matière soit brisée en globules sans utiliser de jets de fluide et que les globules soient dispersés dans l'enceinte ; et une auge annulaire (10) ouverte à sa partie supérieure entourant l'atomiseur pour collecter les granules formés à partir des globules au moins partiellement durcis, et des moyens pour déplacer les granules contenus dans l'auge en direction d'au moins une sortie (22', 22") de l'auge ;
caractérisé en ce que
l'auge (10) comporte dans sa base des ouvertures (21) et des moyens (20) sont prévus pour injecter un gaz à travers les ouvertures dans l'auge, lesdites ouvertures étant dirigées de manière qu'un écoulement circonférentiel de gaz s'établisse dans l'auge, ledit écoulement de gaz servant à déplacer les granules à l'intérieur de l'auge vers ladite sortie au moins (22', 22").

2. Appareil de granulation selon la revendication 1, caractérisé en ce que la ou chaque sortie de l'auge est équipée d'un tube (22') traversant la base de l'auge.

3. Appareil de granulation selon la revendication 1 ou 2, caractérisé en ce que l'atomiseur rotatif comprend un élément réfractaire (4) rotatif autour d'un axe vertical et lesdits moyens pour amener le métal fondu comprennent un conduit d'amenée (7) partant de l'extérieur de l'enceinte jusqu'à une position située au-dessus de l'élément réfractaire (4) à partir duquel le métal fondu peut tomber sur l'élément réfractaire.

4. Appareil de granulation selon la revendication 1, 2 ou 3, dans lequel la paroi latérale de l'enceinte comprend une partie (6A) qui se trouve à un niveau supérieur à la partie supérieure de l'auge (10), ladite partie ayant une forme annulaire dont l'extrémité inférieure est orientée vers la partie supérieure de l'auge.

5. Appareil de granulation selon la revendication 4, dans lequel ladite partie de la paroi latérale est refroidie par un liquide.

6. Appareil de granulation selon la revendication 4, dans lequel ladite partie (6A) de la paroi latérale comporte des ouvertures (15) dirigées vers le bas, et dans lequel des moyens sont prévus pour diriger un gaz de refroidissement à travers les ouvertures vers l'intérieur de l'enceinte.

7. Appareil de granulation selon l'une quelconque des revendications précédentes, dans lequel une surface inclinée (11) part vers le bas de l'atomiseur rotatif jusqu'au bord supérieur adjacent de l'auge.

8. Appareil de granulation selon la revendication 7, dans lequel ladite surface (11) comporte des ouvertures et dans lequel des moyens sont prévus pour diriger un gaz à travers les ouvertures vers la partie supérieure de la surface, grâce à quoi, en service, ledit gaz sert à diriger des granules déposés sur la surface vers l'auge annulaire.

9. Appareil de granulation selon l'une quelconque des revendications précédentes, comprenant des moyens (32, 33) pour introduire un brouillard humide dans l'enceinte afin d'éliminer la chaleur de cette enceinte par évaporation.

10. Appareil de granulation selon la revendication 9, dans lequel les moyens pour introduire le brouillard humide comprennent des pulvérisateurs à eau ou des atomiseurs d'eau actionnés par de l'air.

11. Procédé de granulation d'une matière fondue, dans lequel un courant de matière fondue est amené à un atomiseur rotatif placé dans une enceinte ; la vitesse de rotation de l'atomiseur est telle que la matière fondue est éjectée de l'atomiseur sous forme de globules sans utiliser de jets de fluide ; le passage des globules dans l'enceinte les fait durcir au moins partiellement pour former des granules ; les granules sont collectés dans une auge annulaire ouverte à sa partie supérieure entourant l'atomiseur ; caractérisé en ce que le gaz pénétrant par les ouvertures (21) dans la base de l'auge (10) est injecté dans l'auge (10) pour communiquer un mouvement circonférentiel aux granules (30) contenus dans l'auge (10) en direction d'au moins une sortie (22', 22") de l'auge (10).

12. Procédé selon la revendication 11, dans lequel une quantité de granules refroidis précédemment formés est présente dans l'auge pour faciliter le transfert de chaleur depuis des granules chauds collectés dans l'auge.

13. Procédé selon la revendication 11 ou 12, dans lequel le courant de matière fondue est déversé sur l'élément réfractaire de l'atomiseur rotatif, ledit élément étant rotatif autour d'un axe vertical.

14. Procédé selon la revendication 11, 12 ou 13, dans lequel la température de fonctionnement à l'intérieur de l'enceinte est commandée en injectant un brouillard humide dans l'enceinte pour évacuer la chaleur de l'enceinte par évaporation du brouillard humide.

15. Procédé selon l'une quelconque des revendications 11 à 14, dans lequel la matière fondue est constituée par des scories.
